# EUROPEAN PATENT SPECIFICATION

(11) **EP 0 352 804 B1**
(45) Date of publication and mention of the grant of the patent: **13.03.1996**
(21) Application number: 89113973.5
(22) Date of filing: 28.07.1989
(51) Int. Cl.: C08J 3/20, C08L 27/06, C09D 5/28

(54) **Coloring high-molecular particulate material and coating composition including the same**
Färbung eines hochmolekularen körnigen Materials und Beschichtungsmischung, die dieses Material enthält
Coloration de matériau particulaire macromoléculaire et composition de revêtement en contenant

(30) Priority: 29.07.1988 JP 191955/88; 31.10.1988 JP 275379/88
(43) Date of publication of application: 31.01.1990
(73) Proprietor: Asahipen Corporation, Osaka-City Osaka (JP)
(72) Inventor: Hirata, Tadamitsu, Osaka City Osaka (JP); Nishimura, Yoshihiko, Osaka City Osaka (JP)
(74) Representative: Hansen, Bernd, Dr.rer.nat.

(56) References cited:
- US-A- 2 687 394
- DATABASE WPIL, abstract no. 88-209168, Derwent Publications Ltd, London, GB; & JP-A-63 145 378
- DATABASE WPIL; abstract no. 85-267692, Derwent Publications Ltd, London, GB; & JP-A-60 181 361
- DATABASE WPIL, abstract no. 84-032096, Derwent Publications Ltd, London, GB;

## Description

The present invention relates to a method for producing a colored high-molecular particulate material and coating composition including the same. The object of the invention is to provide a coloring high-molecular particulate material and a coating composition including the same, enabling a coating film to be produced having colorfully designed appearance of various sprinkled patterns of textiles and suede, a texture with smoothness and roughness at the same time as well as visual appreciation of tint configuration to wall papers, synthetic resin sheets or the like.

Heretofore, coating compositions have their colors by mixing coloring pigments of each color into a varnish. The coloring pigments used for such coating compositions have particles up to 10 µm in particle diameter to obviate color shading, to enhance dispersion properties and to provide a uniform color tone. In general, coating compositions become more desirable as the diameter of the particles which make them up become smaller. For example, when a red compound and a white compound are blended to prepare a sprinkled pattern, tiny dots of coloring pigment of different colors are aligned on the film surface of the coating composition and are thoroughly mixed with each other to form a plain color with no spattered pattern, i.e., it visually appears to be a pink coating film, and is hence poor in decorative properties.

The present inventors have conducted extensive research in an attempt to prepare a coating composition having excellent decorative properties which can serve to provide colorful designs and have found the following. Color particles having a particle diameter of 10 - 200 µm were prepared, and these were mixed with differently colored particles into an aqueous varnish to prepare a coating composition in which the color particles are aligned on the coating surface to provide a visually colorful design like that seen in textiles or suede.

One problem is that large-size coloring pigments are difficult to disperse uniformly. Accordingly resin particles have first to be prepared which can act as nuclei for a pigment which enables the color particles to be dispersed in a varnish to prepare a coating composition.

The present inventors attempted to obtain the color particles by pearl polymerization by introducing a monomer and coloring pigments into water. The polymerization, however, was inhibited by the coloring pigments or only the monomer was polymerized posing difficulties for polymerization with coating the coloring pigments.

Alternatively, the present inventors attempted emulsion polymerization by blending a monomer, an emulsifier and coloring pigments into water; interfacial polymerization by polymerizing at the interface between an oil phase and a water phase and offset separation by mixing a poor solvent into a good solvent having coloring pigments and a polymer dissolved therein or like polymerization.

It is difficult in all of the polymerization techniques discussed above to control the particle diameter, and accordingly each results in the formation of particles having a wide particle size distribution, non-uniform color shading on the pattern of the coating film as well as low yield of color particles.

Especially in interfacial polymerization, the coating film was cured with fluid solvent remaining in the coloring particles which resulted in coloring of the interior and particles having poor resistance to scratches.

The present inventors have also developed a coating composition for producing a colorful design finish whose method of preparation is disclosed in Japanese Unexamined Patent Publication No. 145378/1988. In this method, an emulsion resin coating composition mixture including a coloring pigment is admixed with polymer particles having a diameter of from 10 to 100 µm in the presence of an anionic activate surface agent to disperse and stabilise the coloring pigment. A metal salt is then introduced to obtain coloring high-molecular particulate material having a color membrane.

This coating composition has excellent decorative properties, and has tiny dots of its coloring pigments aligned on the coating surface to provide the same colorful effect as that found on textiles or suede as well as the fastness properties of a coating film with non-uniform color shading thereon.

Such a method of preparing a coating composition is much improved over the conventional methods. However, it has the drawback of not completely coating the particle surface of the synthetic emulsion resin with the coloring pigments.

According to the present invention, the afore-mentioned problems can be solved by a method for producing a colored high-molecular particulate material as defined in claim 1.

Preferred features of the invention are specified in the sub-claims. Furthermore, the invention resides in a coating composition comprising the colored high-molecular particulate material obtainable according to the above-mentioned process.

The invention is illustrated in more detail by reference to the accompanying drawings, wherein:
Fig. 1 is a schematic drawing illustrating the fluidization dip method as one of the fabrication methods for use with the present coloring high-molecular particulate material,
Fig. 2 is a longitudinal section illustrating a mold coated with the molded form of the color-ing high-molecular particulate material, and
Fig. 3 is a sectional explanatory view of a particle of the coloring high-molecular particulate material.

The emulsion resin to be favorably used in the present invention can be any of those whose stability is weakened or destroyed in the presence of metal ions, and which then agglomerates or adheres like a gel to the particle surface of the vinyl chloride synthetic resin containing the plasticizer described later.

Examples of such emulsion resins are acryl, styrene acryl, polyester, polyurethane, vinyl chloride-vinyl acetate copolymer, vinyl chloride-acryl copolymer or like synthetic resins and mastic, acaroid, benzoyl, dragon's blood, elemi, sandrach or like natural resins.

Although the surfactants to be used in the invention are not specifically limited, it is preferable to use positive ionics, negative ionics, nonionics or ampholytic surfactants. The preferred amount of such surfactants to be added so that the emulsion may be destabilized in the presence of metal ions is up to 1 wt.% based on the loadings of the emulsion resin having particles not larger than 0.1 µm in particle diameter although the amount is not specifically limited.

Antiforming agents, film forming assistants or the like may optionally be introduced into the emulsion resin when required.

Examples of preferable coloring pigments are ones conventionally known such as titanium dioxide, amber, red iron oxide, chrome yellow, iron blue, carbon black, ultramarine blue, manganese violet or like inorganic pigments and Hansa yellow, benzidine yellow, toluidine red, phthalocyanine blue, phthalocyanine green, dioxazine violet or like organic pigments.

Further, extender pigments such as barytes, calcium carbonate, clay or talc can be used in combination with the above coloring pigments.

The amount of the coloring pigments to be favourably used is not particularly limited. However, 2-300 parts by weight per 100 parts by weight of said emulsion resin solids is preferred.

Usable vinyl chloride synthetic resins are not specifically limited but ones formed by suspension or emulsion polymerization are preferred such as a vinyl chloride homopolymer, vinyl chloride-vinyl acetate copolymer, ethylene-vinyl chloride copolymer, ethylene-vinyl acetate-vinyl chloride copolymer, urethane-vinyl chloride copolymer or chlorinated vinyl chloride copolymer.

It is desirable for the vinyl chloride synthetic resin to be selected so that a coloring high-molecular particulate material can be obtained having an average particle diameter of 10-200 µm, slightly variable depending on the loading of the plasticizer though, and more preferably 10-170 µm.

The plasticizers to be mixed with the vinyl chloride synthetic resins above are not specifically limited but preferred plasticizers are di-2-ethylhexyl phthalate, diheptyl phthalate, di-n-octyl phthalate, di-nonyl phthalate, dibutyl phathalate, butyl benzyl phthalate, di-isodecyl phthalate, di-2-ethylhexyl tetrahydrothalic acid, di-2-ethyl-hexyladipate, di-isodecyl adipate, di-2-ethylhexyl sebacate, tricresyl phosphate, trioctyl phosphate, acetyl trilbutyl citrate, trioctyl trimellitate, tridecyl trimellitate, butyl phthalyl butyl glucolate, epoxy soybean oil, diallyl phthalate or polyethylene glycol dimetha acrylate.

The amount of the plasticizers to be added is 4.7-50 wt.%, more preferably 23-44 wt.%, based on the weight of vinyl chloride synthetic resin after the addition of the plasticizer. Especially the vinyl chloride synthetic resins prepared by suspension polymerization are suitably used in an amount of 33 to 44 wt.%, and the resins prepared by said emulsion polymerization are suitably used in an amount of : 23 to 38 wt.%.

If the plasticizer is contained in an amount of less than 4.7 wt.%, then the coating efficiency of the emulsion resin containing coloring pigments to the particle surface of the vinyl chloride synthetic resin is too low. On the other hand if the plasticizer is contained in an amount exceeding 50 wt.%, then the coating film has insufficient strength resulting in the particles of the resin being softened, and a reduction in the tack strength among the particles which leads to difficulties when removing individual particles at the final stage.

The typical method of admixing the vinyl chloride synthetic resin and the plasticizer is to use a HENSHEL MIXER agitator, during which stabilizing or modifying agents for the resin may be introduced when required.

The desirable amount of the emulsion resins to be used is 0.05-2.0, more preferably 0.1-1, when the amount of the vinyl chloride synthetic resin including the plasticizer used is 1 (part by weight). If the emulsion resin is present in an amount of less than 0.05, then there is insufficient to coat thoroughly the particles of the vinyl chloride synthetic resin which results in the particles having low tinting. On the other hand, if the emulsion resin is present in an amount exceeding 2.0, then its particles tend to agglomerate like a gel which results in the particle strength being deteriorated.

A large amount of the vinyl chloride synthetic resin provides lower fluidity. In this case water may be added for good fluidity when required.

Preferably, the emulsion destabilizing agent is a metal salt.

The metal salts which may be used are not particularly limited but preferred salts are calcium chloride, barium chloride, aluminium sulfate, cuprous sulfate, ferric chloride, silver nitrate or lead acetate.

The metal salt is used to inhibit the stability of the emulsion resin containing coloring pigments and to coagulate the emulsion resin having pigments on the particle surface of the vinyl chloride synthetic resin.

The most suitable amount of the metal salt to be added may be conveniently determined by finding outthe amount of metal salt, which when blended with the emulsion resin, causes it to become agglomerated like a gel.

Alternatively, water can be added to the metal salt forming an aqueous solution of the metal salt, and the emulsion resin then admixed therewith. The weight ratio of the aqueous solution of the emulsion containing coloring pigments and the metal salt is 7:3 to 3:7, more preferably 6:4 to 5:5, taking particle stability into consideration, although it is not particularly limited.

It is possible to use calcium hydroxide instead of the metal salts.

According to the present invention, the emulsion resin having the above coloring pigments and the particles of the vinyl chloride synthetic resin having the plasticizer are mixed with stirring. Thereafter the mixture is admixed with the emulsion destabilizing agent to obtain a dispersion of coloring high-molecular particulate material wherein a film of the emulsion coating composition of the synthetic resin is formed on the particle surface of the vinyl chloride synthetic resin.

The coloring high-molecular particulate material which is obtained preferably has an average particle diameter of 10 to 200 µm, more favourably 30 to 100 µm.

Individual coloring high-molecular particulate material having a particle diameter of up to 10 µm, when mixed with particles of different color, cannot be identified individually with an unaided eye. In this case, the particles of different colors are all thoroughly mixed together and cannot be visually seen as a colorful pattern. On the other hand, particles having a diameter greater than 200 µm give a rough distribution of color without developing the colorful effect of textiles or suede (which are excellent in decorative appearance) as well as a gritty texture failing to provide smoothness.

Particles having a diameter of 30 to 100 µm are able to form a coating having a smooth touch exhibiting outstanding textile - or suede - like texture.

From the above dispersions the coloring high-molecular particulate material and dispersion medium are separated off, then the former is further removed therefrom to obtain a molded form thereof by a preparation method such as fluidization dip or the like.

The fluidization dip method, as one of the possible methods of using the coloring high-molecular particulate material of the invention, will now be described with reference to the accompanying drawings.

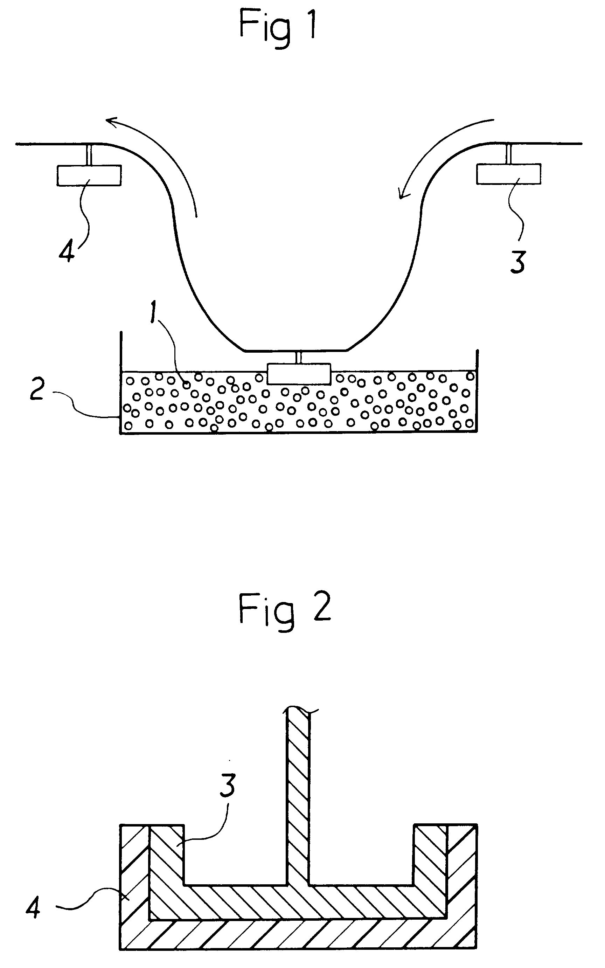

Fig. 1 is a schematic drawing illustrating the fluidization dip preparation method.

In the drawings, (1) is a coloring high-molecular particulate material, (2) is a container for (1) and (3) is a mold.

The coloring high-molecular particulate material (1) is placed in the container (2), and then the heated mold (3) is dipped therein.

A thin film is formed on the outer surface of the mold (3) by fusing the coloring high-molecular particulate material (1).

Subsequently, the mold (3) is removed from the container. After cooling off with air or water, the molded form (4) is stripped from the mold (3).

Fig. 2 is a longitudinal section illustrating the mold (3) coated with the molded form (4) of the coloring high-molecular particulate material (1).

An alternative method of sprinkling the coloring high-molecular particulate material (1) on the surface of the heated mold (3) may also be employed.

The shape of the mold (3) is not limited to that shown in the figures. The mold (3) may also be used without heating, such as by forming a thin film thereon by fusing the coloring high-molecular particulate material (1) in the container (2).

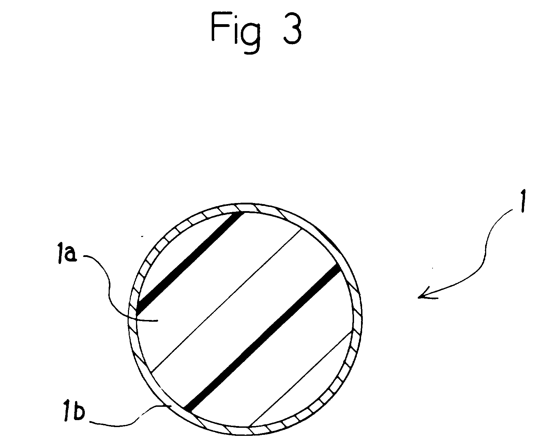

Fig. 3 is a sectional explanatory view of the coloring high-molecular particulate material (1). (1a) indicates a polymer particle and (lb) a color membrane.

According to a preferred feature, a mixture is controlled to have an acid value of not less than 5 in solid portion of dispersed and stabilized pigments and comprises additionally acid resin neutralized by alkaline,

Preferably the polycarboxylic acid resin is selected from an acryl resin, styrene-butadiene resin, styrene-maleic acid copolymer, alkyd resin or alginic acid resin,

It is preferred that the neutralization agent is ammonia water, triethylamine, dimethyl-ethanolamine, potassium hydroxide or sodium hydroxide.

Antiforming agents, film forming assistants or the like may optionally be introduced into the mixture when required.

Examples of preferable coloring pigments are ones conventionally known such as titanium dioxide, amber, red iron oxide, chrome yellow, iron blue,carbon black, ultramarine blue, manganese violet or like inorganic pigments and Hansa yellow, benzidine yellow, toluidine red, phthalocyanine blue, phthalocyanine green, dioxazine violet or like organic pigments.

Further, extender pigments such as barytes, calcium carbonate, clay or talc can be used in combination with the above coloring pigments.

The amount of the coloring pigments to be favorably used is not particularly limited. However, 2-300 parts by weight per 100 parts by weight of said emulsion resin solids is preferred.

Usable synthetic resin particles are not specifically limited but ones formed by suspension or emulsion polymerization such a vinyl chloride homopolymer, copolymer acryl polymer or polyester resin are preferred.

It is desirable for the synthetic resin particles to be selected from the obtained coloring high-molecular particulate material having an average particle diameter of 10 to 200 µm, which is slightly variable depending on the loading of the plasticizer though, and more preferably 10-170 µm.

The desirable amount of the emulsion mixture to be used is 0.05-2.0 more preferably 0.1-1, when the amount of the vinyl chloride synthetic resin including the plasticizer used is 1 (part by weight). If the emulsion mixture is present in an amount of less than 0.05, then there is insufficient to coat thoroughly the particles of the vinyl chloride synthetic resin which results in the particles having low tinting. On the other hand, if the emulsion resin is present in an amount exceeding 2.0, then its particles tend to agglomerate like a gel which results in a deterioration of the particle strength.

In this case, the metal salt is used to inhibit the stability of the polycarboxylic acid resin containing coloring pigments and to coagulate the polycarboxylic acid resin having pigments on the particle surface of the vinyl chloride synthetic resin.

The most suitable amount of the metal salt to be added may be conveniently determined by finding out the amount of metal salt, which when blended with the emulsion resin, causes it to become agglomerated like a gel.

Alternatively, water can be added to the metal salt forming an aqueous solution of the metal salt and the emulsion resin then admixed therewith. The weight ratio of the aqueous solution of the emulsion resin containing coloring pigments and the metal salt is 7:3 to 3:7, more preferably 6:4 to 5:5, taking particle stability into consideration, although it is not particularly limited.

It is possible to use potassium hydroxide instead of the metal salt.

According to the present invention, the mixture having the above coloring pigments and the particles of the synthetic resin are mixed with stirring. Thereafter the mixture is admixed with the metal salt to obtain a dispersion of coloring high-molecular particulate material wherein a film of the emulsion coating composition of the synthetic resin is formed on the particle surface of the vinyl chloride synthetic resin.

The coloring high-molecular particulate material which is obtained has an average particle diameter of 10 to 200 µm, favourably 30 to 100 µm.

Individual coloring high-molecular particulate material having a particle diameter of up to 10 µm, when mixed with particles of different color, cannot be identified individually with an unaided eye. In this case, the particles of different colors are all thoroughly mixed together and cannot be visually seen as a colorful pattern. On the other hand, particles having a diameter greater than 200 µm give a rough distribution of color without developing the colorful effect of textiles or suede (which are excellent in decorative appearance) as well as a gritty texture failing to provide smoothness.

Particles having a diameter of 30 to 100 µm are able to form a coating having a smooth touch exhibiting outstanding textile or suede - like texture.

Furthermore, plasticizers or stabilizers can be added to the coloring high-molecular particulate material to obtain a molded form by conventional fabrication methods such as extrusion or injection molding.

The coating composition comprising the coloring high-molecular particulate material as an essential ingredient will now be described.

The aforementioned dispersions of the coloring high-molecular particulate material is mixed as it is or, after removal of the material, with the addition of an aqueous varnish and an antiforming agent or a thickner when required to obtain the coating composition.

Examples of preferred aqueous varnishes are emulsion resins or water-soluble resins such as acrylic, vinyl acetate and similar other aqueous varnishes without any specific limitation.

It is possible to obtain the coating composition with various textures by varying the degree of hardness or flexibility of the aqueous varnish or the coloring high-molecular particulate material.

It is also possible to obtain a colorful design finish coating composition by suitably combining coloring high-molecular particulate material of varying colors into an aqueous varnish.

The coloring high-molecular particulate material of the present invention has the following advantages.

A coating film formed by mixing particles having differently colored surfaces is identifiable with an unaided eye as giving rise to tiny dots of the colored particles aligned on the coating film surface. The coating film has excellent decorative properties such as a textile or suede like colorful design.

Since the coloring particle has a resin particle of uniformly fixed size serving as a nucleus, the particle size distribution is restricted free from uneven distribution of patterns.

Moreover, the resin particle cured beforehand serving as a nucleus of the coloring pigments affords a high fastness property to the coating film.

Furthermore, the emulsion resin containing color pigments effectively coats the particle surface of the vinyl chloride synthetic resin by virtue of the plasticizer present therein.

The molded form and the coating composition comprising the coloring high-molecular particulate material can be used to obtain a delusterd colorful design finish. For example, the former may be used for interior automotive seats or wall papers and the latter is applicable to walls, appliances, electronic equipments, furniture or display.

The invention will now be described in more detail with reference to the following examples, comparative examples and test examples.

### (Example 1)

An 80 parts by weight portion of styrene-acryl emulsion with 47% of non volatile content ( brand name"Acronal YJ1210D ", product of Mitsubishi Yuka Badische Co., Ltd.) serving as the emulsion resin was mixed with 40 parts by weight of titanium dioxide as the coloring pigment.

Consequently, to the vinyl chloride polymer with the particles in an average particle diameter of about 40 µm (brand name "Geon 103Z XA", product of the Japanese Geon Co., Ltd.) serving as the vinyl chloride synthetic resin, di- n -octyl phthalate as the plasticizer was added to a content of 29 wt.% preparing 150 parts by weight of the mixture in total.

The emulsion resin having the coloring pigment and the vinyl chloride synthetic resin having the plasticizer were combined with the further addition of suitable amount of water, wherein 1.1 parts by weight of calcium chloride as the metal salt was introduced to prepare the dispersions of the coloring high-molecular particulate material in an average particle diameter of 42 µm.

### (Comparative Examples 1-3)

The dispersions of the coloring high-molecular particulate material with 42 µm in an average particle diameter (comparative example 1), same with 43 µm in an average particle diameter (comparative example 2) and same with 48 µm in an average particle diameter (comparative example 3) were respectively prepared in the same manner as in example 1 except di- n -octyl phthalate serving as the plasticizer was mixed in an amount of 0% (comparative example 1), 3.9% (comparative example 2) and 52% (comparative example 3) based on the combined amount of the resins.

### (Example 2)

The dispersions of the coloring high-molecular particulate material of 45 µm in an average diameter was prepared in the same manner as in example 1 with the exception of using aluminum sulfate as the metal salt.

### (Example 3)

A 80 parts by weight portion of-acrylic emulsion with 50% of nonvolatile content (brand name "Nicazol RX 876", product of Nippon Carbide Industries Co., Ltd.) serving as the emulsion resin was mixed with 40 parts by weight of titanium dioxide as the coloring pigments.

Consequently, to the vinyl chloride polymer with the particles in an average particle diameter of about 130 µm (brand name "Sumilit SX-D", product of Sumitomo Chemical Co., Ltd.) serving as the vinyl chloride synthetic resin, dibutyl phthalate as the plasticizer was added to a content of 38 wt.% preparing 400 parts by weight of the mixture in total.

The emulsion resin having the coloring pigment and the vinyl chloride synthetic resin having the plasticizer were combined with the further addition of suitable amount of water, wherein 0.6 part by weight of calcium chloride as the metal salt was introduced to prepare the dispersions of the coloring high-molecular particulate material in an average particle diameter of 145 µm.

### (Example 4)

An 80 parts by weight portion of acrylic emulsion with about 50% of nonvolatile content (brand name"Nicazol RX 876", product of Nippon Carbide Inldustries Co., Ltd.) serving as emulsion resin was mixed with 40 parts by weight of titanium dioxide as a coloring pigment.

Consequently, to vinyl-chloride the vinyl-acetate copolymer with the particles in an average particle diameter of about 100 µm (brand name "Denka Vinyl MM-90 ", product of the Electro Chemical Industrial Co., Ltd.) serving as the vinyl chloride synthetic resin, di- n -octyl phthalate as the plasticizer was added to a content of 33 wt.% preparing 76 parts by weight of the mixture in total.

The emulsion resin having the coloring pigment and the vinyl chloride synthetic resin having the plasticizer were combined with the further addition of suitable amount of water, wherein 1, 2 parts by weight of calcium chloride as the metal salt was introduced to prepare the dispersions of the coloring high-molecular particulate material in an average particle diameter of 115 µm.

### (Comparative Example 4 and 5)

The dispersions of the coloring high-molecular particulate material with 115 µm in an average particle diameter was prepared in the same manner as in example 4, except the amount of the vinyl chloride synthetic resin comprising the plasticizer to be mixed was 1000 parts by weight (comparative example 4) and 15 parts be weight (comparative example 5).

### (Exmaple 5)

A 80 parts by weight portion of styrene-acryl emulsion with 47% of non volatile content ( Brand name"Acronal YJ 1210D ", product of Mitsubishi Yuka Badische Co., Ltd.) serving as the emulsion resin was mixed with 40 parts by weight of titanium dioxide as the coloring pigment.

Consequently, to the ethylene-vinyl chloride copolymer of about 150 µm (brand name "Rheulon E-1050", product of Toso Inc.) serving as the vinyl chloride synthetic resin, di -n- octyl phthalate as the plasticizer was added to a content of 9.1 wt.% preparing 75 parts by weight of the mixture in total.

The emulsion resin having the coloring pigment and the vinyl chloride synthetic resin having the plasticizer were combined with the further addition of suitable amount of water, wherein 0.37 parts by weight of calcium chloride as the metal salt was introduced to prepare the dispersions of the coloring high-molecular particulate material in an average particle diameter of 155 µm.

### (Example 6)

A 80 parts by weight portion of vinyl-chloride vinyl-acetate emulsion with about 43% of nonvolatile content (brand name "Vinybran 601", product of Nisshin Chemical) serving as the emulsion resin was mixed with 40 parts by weight of titanium dioxide as the coloring pigment.

Consequently, to the vinyl chloride polymer with the particles in an average particle diameter of about 40 µm (brand name "Geon 103 ZXA", product of The Japanese Geon Co., Ltd.) serving as the vinyl chloride synthetic resin, di-n-isodecyl adipate as the plasticizer was added to a content of 29 wt.% preparing 172 parts by weight of the mixture in total.

The emulsion resin having the coloring pigment and the vinyl chloride synthetic resin having the plasticizer were combined with the further addition of suitable amount of water, wherein 0.34 parts by weight of aluminum sulfate as the metal salt was introduced to prepare the dispersions of the coloring high-molecular particulate material in an average diameter of 45 µm.

### (Comparative Example 6)

A 80 parts by weight portion of styrene-acryl emulsion (brand name "Acronal YJ 1210D", product of Mitsubishi Yuka Badische Co., Ltd.) serving as the emulsion resin was mixed with 40 parts by weight of titanium dioxide as the coloring pigment.

Consequently, to the vinyl chloride polymer with the particles in an average particle diameter of about 1 µm (brand name "Geon 121", product of The Japanese Geon Co.,Ltd.) serving as the vinyl chloride synthetic resin, di- n -octyl phthalate as the plasticizer was added to a content of 29 wt.% preparing 150 parts by weight of the mixture in total.

The emulsion resin having the coloring pigment and the vinyl chloride synthetic resin having the plasticizer were combined with the further addition of suitable amount of water, wherein 1.1 parts by weight of calcium chloride as the metal salt was introduced to prepare the dispersions of the coloring high-molecular particulate material in an average particle diameter of 2 µm.

### (Comparative Example 7)

The dispersions of the coloring high-molecular particulate material in an average particle diameter of 250 µm was prepared in the same manner as in example 6 with the exception of using a vinyl-chloride vinyl-acetate copolymer having the particles in an average particle daimeter of 220µm (brand name "Graphtomer", product of The Japanese Geon Co.,Ltd.) serving as the vinyl chloride synthetic resin.

### (Test)

A 50 parts by weight portion of the white coloring high-molecular particulate material removed from the dispersions prepared in each example and comparative example was respectively mixed with the black coloring high-molecular particulate material removed from the dispersions each prepared in same manner as in each example and comparative example, except 4.4 parts by weight of carbon black was mixed in stead of the pigment used earlier.

Each mixture obtained was thereafter blended with 50 parts by weight of the aqueous varnish in a nonvolatile content of 55% to obtain the coating composition.

Each coating composition was applied to the surface of a slate in the wet-on-wet coating to be examined appearance and texture of the coating film.

The appearance was observed in terms of visibility 2 hours after application with unaided eye.

In evaluating the coating composition, twenty panelists selected indiscriminately graded the composition at one by one point from the best score of 10 to the worst of 0. Table 1 shows the average point of each coating composition.

The coating composition was also checked through a microscope if it coated throughly the particles. In Table 1, ○ shows the composition coated the particles throughly and X shows the ones not so.

Furthermore, the coating composition was scratched by nails 30 days after the application to check the particle strength.

In Table 1, ○ shows the compositions not peeled off and × shows the one peeled off.

**Table 1**

| | | Appearance | Texture | Coating | Strength |
|---|---|---|---|---|---|
| Example | 1 | 8. 3 | 9. 2 | ○ | ○ |
| | 2 | 8. 7 | 8. 9 | ○ | ○ |
| | 3 | 6. 8 | 6. 8 | ○ | ○ |
| | 4 | 7. 4 | 7. 5 | ○ | ○ |
| | 5 | 6. 2 | 6. 2 | ○ | ○ |
| | 6 | 7. 8 | 8. 6 | ○ | ○ |
| Comparative Example | 1 | 1. 2 | 4. 8 | × | ○ |
| | 2 | 2. 1 | 5. 3 | × | ○ |
| | 3 | 2. 7 | 1. 2 | ○ | × |
| | 4 | 2. 4 | 4. 8 | × | ○ |
| | 5 | 2. 3 | 4. 7 | ○ | × |
| | 6 | 1. 6 | 7. 0 | ○ | ○ |
| | 7 | 3. 5 | 2. 3 | ○ | ○ |

The coating composition in example 1 to 6 exhibit the colorful effect of the sprinked pattern and the textile- and suede-like texture in smoothness and suitable roughness.

Of those compositions, the ones in examples 1 and 2 are especially outstanding.

The compositions in comparative examples 1, 2, 4 and 5 are, unlike the above compositions, exhibit uneven distribution of colors in appearance, especially the coating composition in comparative example 2 has the particles obviously not coated by the coloring pigments. The composition in comparative example 3 has high surface tackiness when touched and the composition in comparative example 6 only reveals a plain color visually failing to provide the appearance of the colorful design.

The coating composition in comparative example 7 has the rough color distribution in appearance different from the colorful effect of textiles and suede giving a disagreeable touch of too gritty.

It is presumed that the coloring high-molecular particulate material having the particles in an average particle diameter of about 10 to about 200 µm, preferably about 30 to about 100µm, as well as the amount of the plasticizer to be added is about 4.7 to about 50 wt.%, preferably about 23 to about 44 wt.%, give excellent results in appearance and texture.

### (Example 7)

A 22.6 parts by weight portion of styrene-acryl emulsion with 50% of non volatile content (brand name"Nicazole RX 291 " acid value 20, product of Nihon carbite Industry Co., Ltd.) serving as the polycarboric acid resin and a 52.6 parts by weight portion of "Nicazole RX 669 " (brand name as same as the above, acid value 0, non volatile content 50% was mixed with 40 parts by weight of titanium dioxide as the coloring pigment.

Consequently, the vinyl chloride polymer as for the polymer particles in an average particle diameter of about 40 µm (brand name "Geon 103 ZXA", product of the Japanese Geon Co.,Ltd.) is preparing 150 parts by weight.

The emulsion resin comprising of polycarboric acid resin (Acid value 6) and having the coloring pigment and the synthetic resin particles were combined with the further addition of suitable amount of water, wherein 1.1 parts by weight of calcium chOloride as the metal salt was introduced to prepare the dispersions of the coloring high-molecular particle material in an average particle diameter of 42µm.

### (Comparative Examples 8 and 9)

The dispersions of the coloring high-molecular particulate material with 42µm in an average particle diameter (comparative example 8), same with 43µm in an average particle diameter (comparative example 9) and same with 48µm in an average particle diameter were respectively prepared in the same manner as in example 7, except acid value serving as the polycarboric acid resin was prepared in 4.0 (comparative example 8), 3.0 (comparative example 9).

### (Example 8)

The dispersions of the coloring high-molecular particulate material of 45µm in an average diameter was prepared in the same manner as an example 7 with the exception of using aluminum sulfate as the metal salt.

### (Test)

A 50 parts by weight portion of the white coloring high-molecular particulate material removed from the dispersions prepared in each example and comparative examples was respectively mixed with the black coloring high-molecular particulate material removed from the dispersions each prepared in the same manner in each example and comparative example, except 4.4 parts by weight of carbon black was mixed in stead of the pigment used earlier.

Each mixture obtained was thereafter blended with 50 parts by weight of the aqueous varnish in a nonvolatile content of 55% to obtain the coating composition.

Each coating composition was applied to the surface of a slate in the wet-on-wet coating to be examined appearance and texture of the coating film.

The appearance was observed in terms of visibility 2 hours after application with unaided eye.

In evaluating the coating composition, twenty panelists seleceted indiscriminately graded the composition at one by one point from the best score of 10 to the worst of 0. Table 2 shows the average point of each coating composition.

The coating composition was also checked through a microscope if it coated throughly the particles. In Table 2, ○ shows the compositions coated the particles throughly and × shows the ones not so.

Furthermore, the coating composition was scratched by nails 30 days after the application to check the particle strength.

In Table 2, ○ shows the compositions not peeled off and× shows the one peeled off.

**Table 2**

| | | Appearance | Texture | Coating | Strength |
|---|---|---|---|---|---|
| Example | 7 | 8. 3 | 9. 2 | ○ | ○ |
| | 8 | 8. 7 | 8. 9 | ○ | ○ |
| Comparative Example | 8 | 1. 2 | 4. 8 | × | ○ |
| | 9 | 2. 1 | 5. 3 | × | ○ |

The coating composition in example 1 and 2 exhibit the colorful effect of the sprinkled pattern and the textile- and suede-like texture in smoothness and suitable roughness.

On the contrary, comparative example 1 and 2, especially comparative example had many uncolored particles, have the rought color distribution in appearance different from the colorful effect.

## Claims

1. A method for producing colored high-molecular particulate material comprising the steps of;
(a) providing a mixture of an emulsion resin solution and a pigment;
(b) providing vinyl chloride synthetic resin particles containing a plasticizer in an amount of 4.7 - 50 wt. % based on the whole weight of said particles and said plasticizes;
(c) coating said mixture of step (a) on the particle surfaces of the resin of step (b) ; and
(d) adding an emulsion destabilizing agent to the mixture obtained in step (c) to obtain a coloured high molecular particulate material with an average diameter of 10 to 200µm.

2. A method according to claim 1 wherein said emulsion resin solution has an acid value of not less than 5 in the solid content thereof and comprises additionally polycarboxylic acid resin neutralized by an alkaline agent.

3. A method according to claim 1 or 2 wherein said emulsion destabilizing agent is a metal salt.

4. A method according to claim 1 or 2 wherein said emulsion destabilizing agent is a metal hydroxide.

5. A method according to any one of the claims 1 to 4, wherein the weight ratio of the emulsion mixture to the vinyl chloride synthetic resin particles is from 0.05 - 2.0 : 1.

6. A method according to any one of the claims 1 to 4, wherein the weight ratio of the emulsion mixture to the emulsion destabilizing agent is 1 : 0.4 - 2.3.

7. A coating composition comprising the colored high-molecular particulate material obtainable according to any one of the preceding claims.

## Patentansprüche

1. Verfahren zur Herstellung eines farbigen, hochmolekularen, körnigen Materials, umfassend die Schritte:
(a) Schaffen einer Mischung aus einer Emulsionsharzlösung und einem Pigment;
(b) Schaffen von synthetischen Vinylchloridharzteilchen, umfassend einen Weichmacher in einer Menge von 4,7 bis 50 Gew.%, bezogen auf das Gesamtgewicht der Teilchen und des Weichmachers,
(c) Beschichten der Mischung von Schritt (a) auf die Teilchenoberflächen des Harzes von Schritt (b); und
(d) Zugabe eines Emulsionsdestabilisiermittels zu der Mischung, erhalten gemäß Schritt (c), unter Erhalt eines farbigen, hochmolekularen, körnigen Materials mit einem durchschnittlichen Durchmesser von 10 bis 200 µm.

2. Verfahren nach Anspruch 1,
worin die Emulsionsharzlösung einen Säurewert von nicht weniger als 5 in dem Feststoffgehalt davon hat und zusätzlich ein Polycarbonsäureharz enthält, das durch ein alkalisches Mittel neutralisiert ist.

3. Verfahren nach Anspruch 1 oder 2,
worin das emulsionsdestabilisierende Mittel ein Metallsalz ist.

4. Verfahren nach Anspruch 1 oder 2,
worin das emulsionsdestabilisierende Mittel ein Metallhydroxid ist.

5. Verfahren nach einem der Ansprüche 1 bis 4,
worin das Gewichtsverhältnis der Emulsionsmischung zu den synthetischen Vinylchloridharzteilchen von 0,05-2,0 : 1 ist.

6. Verfahren nach einem der Ansprüche 1 bis 4,
worin das Gewichtsverhältnis der Emulsionsmischung zu dem emulsionsdestabilisierenden Mittel 1:0,4 - 2,3 ist.

7. Beschichtungszusammensetzung, umfassend das farbige, hochmolekulare, körnige Material, erhältlich nach einem der vorhergehenden Ansprüche.

## Revendications

1. Procédé de préparation d'une matière particulaire colorée de masse moléculaire élevée comprenant les étapes consistant à :
(a) réaliser un mélange d'une solution de résine en émulsion et d'un pigment;
(b) fournir des particules de résine synthétique de chlorure de vinyle contenant un plastifiant dans une proportion de 4,7 à 50 % en poids par rapport au poids total de ces particules et de ce plastifiant;
(c) appliquer ce mélange de l'étape (a) sur les surfaces des particules de la résine de l'étape (b); et
(d) ajouter un agent de déstabilisaton de l'émulsion au mélange obtenu dans l'étape (c) pour obtenir une matière particulaire de masse moléculaire élevée colorée ayant un diamètre moyen de 10 à 200 µm.

2. Procédé selon la revendication 1, dans lequel cette solution de résine en émulsion a un indice d'acide non inférieur à 5 dans son contenu solide et comprend en outre une résine d'acide polycarboxylique neutralisé par un agent alcalin.

3. Procédé selon la revendication 1 ou 2, dans lequel cet agent de déstabilisation de l'émulsion est un sel métallique.

4. Procédé selon les revendications 1 ou 2, dans lequel cet agent de déstabilisation de l'émulsion est un hydroxyde métallique.

5. Procédé selon l'une quelconque des revendications 1 à 4, dans lequel le rapport pondéral du mélange en émulsion aux particules de résine synthétique de chlorure de vinyle est de 0,05 à 2,0 : 1.

6. Procédé selon l'une quelconque des revendications 1 à 4, dans lequel le rapport pondéral du mélange en émulsion à l'agent de déstabilisation de l'émulsion est de 1 : 0,4 à 2,3.

7. Composition de revêtement comprenant la matière particulaire colorée de masse moléculaire élevée pouvant être obtenue selon l'une quelconque des revendications précédentes.
